Europäisches Patentamt

European Patent Office

Office européen des brevets

(19)

(11)  EP 0 800 597 B1

(12)  FASCICULE DE BREVET EUROPEEN

(45) Date de publication et mention
de la délivrance du brevet:
**07.08.2002 Bulletin 2002/32**

(21) Numéro de dépôt: **96937356.2**

(22) Date de dépôt: **29.10.1996**

(51) Int Cl.⁷: **D21H 21/10**, D21H 23/14,
D21H 17/68, D21H 17/45,
D21H 17/69

(86) Numéro de dépôt international:
**PCT/FR96/01695**

(87) Numéro de publication internationale:
**WO 97/16598 (09.05.1997 Gazette 1997/20)**

(54) **PROCEDE POUR AMELIORER LA RETENTION DANS UN PROCEDE DE FABRICATION DU PAPIER, ET UTILISATION D'UN AGENT DE RETENTION A CETTE FIN**

VERFAHREN ZUR VERBESSERUNG DER RETENTION IN DER PAPIERHERSTELLUNG UND VERWENDUNG EINES DAFÜR GEEIGNETEN RETENTIONSMITTELS

METHOD FOR ENHANCING RETENTION IN A PAPER MAKING PROCESS, AND USE OF A RETENTION AGENT THEREFOR

(84) Etats contractants désignés:
**DE FI FR SE**

(30) Priorité: **30.10.1995 FR 9513051**

(43) Date de publication de la demande:
**15.10.1997 Bulletin 1997/42**

(73) Titulaire: **S. N. F.**
**F-42000 Saint-Etienne (FR)**

(72) Inventeurs:
• **HUND, René**
**F-42390 Villars (FR)**
• **JEHN-RENDU, Christian**
**F-42000 Saint-Etienne (FR)**

(74) Mandataire: **Vuillermoz, Bruno**
**Cabinet Laurent & Charras**
**B.P. 32**
**20, rue Louis Chirpaz**
**69131 Ecully Cédex (FR)**

(56) Documents cités:
**EP-A- 0 235 893          EP-A- 0 373 306**
**WO-A-94/26972          US-A- 4 913 775**
**US-A- 5 068 276**

• **'British Encyclopaedia', 1992, BRITISH ENCYCLOPAEDIA INC.**

**Description**

**Domaine Technique :**

L'invention concerne un procédé pour la fabrication du papier, carton et analogue, elle se rapporte également à l'utilisation d'un agent de rétention pour la mise en oeuvre de ce procédé.

L'invention concerne plus particulièrement une combinaison spécifique d'agents de rétention et de conditions opératoires favorisant, la rétention des fines et des charges lors de la formation de la feuille.

Le procédé selon l'invention, ainsi que les compositions selon l'invention, améliorent de plus certaines propriétés du papier lui-même, comme notamment l'opacité.

**Techniques Antérieures :**

Lors de la fabrication du papier, du carton ou analogue, il est bien connu d'introduire dans la pâte cellulosique des agents de rétention dont la fonction est de retenir un maximum de fines et de charges dans la feuille. Les effets bénéfiques qui découlent de l'utilisation d'un agent de rétention sont essentiellement :

- l'augmentation de la production et de la diminution des coûts de fabrication : économie énergétique, marche plus régulière de la machine, rendement plus élevé en fibres, fines, charges et de produits d'ennoblissement anioniques, plus faible acidité dans le circuit liée à une diminution de l'utilisation de sulfate d'alumine et donc amoindrissement des problèmes de corrosion ;
- et l'amélioration de la qualité : meilleure formation et épair ; amélioration du taux d'humidité sur feuille, de l'opacité, du lissé, du pouvoir absorbant et diminution de la porosité du papier.

Il existe de très nombreuses publications sur ce sujet, ainsi qu'un certain nombre de produits et procédés utilisés dans l'industrie. Il s'agit donc d'un secteur technique qui a fait l'objet de nombreuses recherches, dont certains paramètres sont bien connus mais dont d'autres paramètres le sont moins.

L'invention concerne un système dont le concept général est connu, à savoir l'addition à la pâte à papier cellulosique, (contenant les additifs habituels et préparée en amont de manière classique), d'un polymère de haut poids moléculaire, cationique, comme premier agent de rétention, dénommé parfois dans la littérature par « agent principal de rétention), puis d'un second agent de rétention, dénommé parfois dans la littérature par « agent secondaire de rétention), microparticulaire essentiellement minéral et anionique. On effectue ensuite éventuellement un cisaillement de la pâte floculée ou en cours de floculation entre les deux points d'addition, et la pâte ainsi traitée est ensuite amenée à la caisse de tête de la machine à papier.

Le document EP-A-0 348 366 décrit ainsi une adjonction d'un composé d'aluminium à la pâte, puis d'un polymère cationique, puis d'un acide polysilicique lui-même caractérisé par une surface spécifique très élevée de 1050 m2/g au moins. Mais ce dernier produit est relativement onéreux.

Le document EP-A-0 235 893 décrit l'utilisation comme premier agent de rétention d'un polymère cationique de haut poids moléculaire (un million et plus), puis une étape de cisaillement, puis l'addition de bentonite comme second agent, dont un inconvénient bien connu est de poser des problèmes d'environnement et, accessoirement, de risquer d'affecter la blancheur du papier. Selon ce document, le polymère est essentiellement linéaire. Des microflocs sont obtenus après l'étape de cisaillement, et leur cationicité est suffisante pour interagir avec la bentonite. Un inconvénient important de cette technique est une mise en oeuvre délicate. Elle implique en effet l'emploi d'une poudre extrêmement fine difficile à disperser. Par ailleurs, le pouvoir gonflant de la bentonite entraîne un risque sérieux de perte de contrôle de la montée en viscosité, avec même un risque de gélification. L'exemple 4 de ce document illustre par ailleurs à quel point le ratio de dosage polymère / bentonite est sensible.

Le document EP-B-0 373 306 préconise l'adjonction d'un polymère cationique de haut poids moléculaire et d'une association ou combinaison d'une matière siliceuse colloïdale microparticulaire (comme la bentonite ou analogue) avec un polymère organique soluble dans l'eau, de poids moléculaire inférieur à 100 000, et dont la caractéristique repose sur une densité de charge anionique ou cationique élevée, de 4 à 24 meq/g. L'utilisation de ce polymère a pour but de modifier l'ionicité de la bentonite. Les exemples de ce document sont en règle générale à 10 % en poids de polymère de bas poids moléculaire par rapport à la bentonite, de telles teneurs élevées étant effectivement nécessaires pour modifier notablement l'ionicité.

Par ailleurs, les phénomènes liés à la rétention ont intéressé de nombreux auteurs.

Ainsi T.G. Waech (Tappi Journal, mars 1993) décrit et recommande une séquence d'addition faisant intervenir l'agent de rétention avant l'argile (« Kaolin WPSD clay ») utilisée comme charge. Ce document décrit également l'introduction de l'agent de rétention avant la pompe d'alimentation (« fan pump »), c'est-à-dire avant une zone de fort cisaillement, l'argile étant ajoutée ensuite comme décrit dans le document EP-A-0 235 893 cité ci-dessus.

D'autres auteurs ont étudié la caractéristique du point d'introduction préféré de l'agent de rétention, notamment par rapport aux points de cisaillement qui existent sur la ligne. Certains ont recommandé d'éviter de cisailler les flocs, d'autres ont suggéré de floculer avant le cisaillement (théorie des flocs durs ou mous, «tenacious» ou «soft»), d'autres encore ont indiqué que le meilleur point d'introduction devait être déterminé par des essais.

Parmi la nombreuse littérature disponible, on peut citer les documents suivants :

- Sikora et Stratton Tappi, Novembre 1981, vol. 64, N° 11 qui décrivent le cisaillement des flocs et leur réaggrégation.

- Luner, Tappi Journal, 1984 Papermakers Conference Atlanta, pp. 95-99 qui décrit l'addition du polymère cationique de rétention avant la charge et confirme la réaggrégation après cisaillement, et l'influence de nombreux paramètres sur l'opacité.

- Tappi, Vol. 56, N° 3, mars 1973, p. 86 (flocs « mous» vs flocs « durs » ou « tenaces »).

- GB-A-1 265 496, qui décrit l'introduction du floculant « en un point quelconque efficace pour la rétention ».

- US-A- 4 305 781, qui associe un polymère floculant et la bentonite, et recommande de floculer après les étapes de cisaillement.

- « The use of Water Soluble polymers as floculants in Paper making », William A. Foster, Designed Product Dpt, DOW CHEMICAL, qui indique que les flocs présentent des réactivités différentes au cisaillement et que la pratique consiste à essayer plusieurs points d'addition.

- US-A-3,052,595, qui indique que deux séquences sont sensiblement équivalentes, à savoir :

    1) pâte / charge minérale / bentonite (1-20 %) / floculant
    2) pâte / polymer floculant / charge / bentonite avec toutefois une préférence pour la séquence 1).

- Alince et Lepoutre, Tappi Journal 1/83 qui décrivent l'inversion de la charge de kaolin par un polymère cationique de bas poids moléculaire ;

- et enfin Hubbe, Tappi Journal 1986, p. 116, qui confirme que le point d'addition résulte le plus souvent d'un « compromis » dont le meilleur est souvent « à l'entrée de la pompe d'alimentation, malgré le fort cisaillement ».

On peut donc résumer l'état de la technique en indiquant qu'il est connu d'utiliser des systèmes dénommés « dual » comprenant un premier agent de rétention cationique, de haut poids moléculaire, qui doit souvent être linéaire ou sensiblement linéaire, de cisailler ensuite éventuellement les flocs obtenus, puis d'ajouter un second agent auxiliaire de rétention microparticulaire minéral qui est caractérisé par une forte surface spécifique (800 à 1000 m$^2$ / g et plus) et consiste notamment en la bentonite ou la bentonite modifiée (EP-B-0 235 893), voire un acide polysilicique (EP-A-0 348 366).

Dans le document WO-A-94 26972, pour éviter les inconvénients, notamment de dissolution des agents de rétention constitués de polymères de haut poids moléculaire, on a proposé de remplacer ces polymères par l'association d'un homopolymère dérivé de N-vinylamide, de poids moléculaire de l'ordre de dix mille (10 000), et de pigments microparticulaires minéraux, tels que les silices, alumine, titane, kaolin ou la bentonite qui est préférée. Ici, le pigment minéral se comporte comme une charge et n'agit pas comme agent de rétention des fines ou des charges dans la feuille.

Naturellement, il est également bien connu depuis largement 10 ou 20 ans, que la bentonite et le kaolin sont deux additifs classiques, qui s'imposent de façon équivalente à l'esprit de tout homme du métier de l'industrie du papier, comme d'ailleurs également le carbonate de calcium, le dioxyde de titane et d'autres additifs classiques.

Mais malgré cette connaissance, aucune tentative a été conduite pour utiliser un kaolin comme agent second de rétention.

En effet, l'homme de métier est dissuadé d'utiliser comme agents minéraux de rétention des composés présentant une faible surface spécifique.

## Description de l'invention :

L'invention concerne un procédé pour améliorer la rétention lors de la fabrication du papier, carton ou analogue, qui consiste :

- tout d'abord, à ajouter à la suspension fibreuse un premier agent de rétention formé par un (co)polymère cationique de la famille des poly(meth)acrylamides de haut poids moléculaire, c'est-à-dire dont la viscosité intrinsèque est supérieure ou égale à 7 dl/g
- puis, éventuellement à cisailler les flocs obtenus,
- et enfin, à ajouter à la suspension un second agent de rétention de caractère minéral,

<u>caractérisé</u> en ce que le second agent de rétention est un pigment de kaolin, dont la surface spécifique est comprise entre 5 et 100 m$^2$/g.

Il est tout à fait surprenant qu'un produit minéral (kaolin) présentant une aussi faible surface spécifique par rapport à celles connues jusqu'alors pour cette application (bentonite, silice), puisse non seulement remplir efficacement cette fonction de second agent de rétention des fines dans la feuille, mais également éviter les inconvénients seconds de ces produits.

L'homme de métier sait en effet que la surface spécifique est une indication de la structure du cristal et de son degré d'agglomération. Ainsi, les grandes surfaces spécifiques sont synonymes d'un grand pouvoir d'agglomération particulaire et d'une disponibilité accrue de développer des sites anioniques ou cationiques, suivant la substance minérale considérée.

En d'autres termes, l'invention consiste, dans les systèmes de rétention dual comprenant un premier agent polymère cationique de haut poids moléculaire et un second agent minéral microparticulaire anionique, à avoir sélectionné un nouvel agent minéral de rétention, à savoir le kaolin, de surface spécifique de dix à cent fois inférieure à celle des agents minéraux connus à ce jour pour cette fonction (bentonite, silice), alors que l'homme du métier était dissuadé d'utiliser un tel composé présentant une surface spécifique aussi faible. Par ailleurs et surtout, on ne pouvait pas imaginer que cette selection non seulement permette de remplir avec succès les mêmes fonctions, mais également permette d'une part, d'éviter les inconvénients rappelés ci-dessus de la bentonite, et d'autre part de réduire le coût en investissements des installations.

On notera que d'autres composés minéraux de faible surface spécifique, tels que l'oxyde de titane, le carbonate de calcium précipité ou non (comparable à celle du kaolin par opposition à la surface spécifique très élevée de, la bentonite) connus également comme charges, papetières ne sont pas capables de remplir la même fonction que le kaolin.

Le kaolin est choisi parmi les produits commercialisés présentant une surface spécifique comprise entre cinq et cent mètres carrés par gramme (5 et 100 m2/g), de préférence entre dix et trente mètres carrés par gramme (10 à 30 m2/g), soit dix fois inférieure à celle de la bentonite, et cent fois inférieure à celle de la silice colloïdale.

On a constaté que pour une surface spécifique de kaolin inférieure à 5m$^2$ / g, on n'obtient pas d'effets notables.

Par ailleurs, il n'existe pas de limites supérieures à la surface spécifique acceptable, autre que celle des pigments connus actuellement, c'est à dire en pratique inférieure à cent mètres carrés par gramme.

La proportion de kaolin représente entre 0,5% et 5 %, de préférence entre 1 et 3 %, en poids sec de kaolin par rapport au poids sec de pâte. On a observé que des proportions de kaolin inférieures à 0,5% ne donnaient plus d'effets sensibles, et qu'au delà de 5%, il n'y avait plus d'amélioration proportionnelle.

Le polymère cationique de haut poids moléculaire c'est-à-dire correspondant à une i.v. de l'ordre de ≥ 7, avantageusement ≥ 9 ou de préférence ≥ 11 dl/g) sera choisi parmi les homo et copolymères linéaires ou ramifiés, comportant jusqu'à environ 30 ou mieux 50-55 mole % de motifs cationiques, de monomères vinyliques copolymérisés avec des monomères de type acrylamide (AM), méthacrylamide (MAM), ou choisis dans le groupe comprenant l'acrylate de diméthylaminoéthyle (ADMAE), le méthacrylate de diméthylaminoéthyle (MADAME), quaternisés ou salifiés, le chlorure d'acrylamidopropyltriméthylammonium (APTAC), le chlorure de diméthyldiallylammonium (DADMAC) et le chlorure de méthacrylamidopropyltriméthylammonium (MAPTAC).

Dans une forme de réalisation avantageuse, le kaolin est prétraité par un polymère d'acide vinylique fortement anionique, linéaire ou ramifié, de poids moléculaire compris entre cent mille (100 000) et quatre cent mille (400 000), de préférence entre 120 000 et 150 000. En effet, le poids moléculaire du polymère d'acide vinylique doit être suffisamment faible pour ne pas floculer le kaolin et suffisamment élevé pour ne pas conduire à un effet dispersif.

On observe que pour des poids moléculaires inférieurs à 100 000, on a des problèmes de redispersion, alors que pour des poids moléculaires supérieurs à 400 000, on voit apparaître des problèmes de floculation du kaolin.

L'homme de métier saura choisir, par des essais de routine, un polymère d'acide vinylique de poids moléculaire capable de répondre au double critère (de non floculation du kaolin et d'absence d'effet dispersif notable) énoncé plus haut.

On citera particulièrement les (co)polymères d'acides vinyliques suivants :

- les homopolymères et co-polymères d'acide acrylique, d'acide méthacrylique, d'acide acrylamidométhylpropylsulfonique (AMPS),
- les copolymères des monomères ci-dessus avec un acrylamide ou un méthacrylamide.

Avantageusement, le polymère d'acide vinylique est l'acide polyacrylique.

Dans le procédé selon l'invention, la proportion d'acide polyacrylique est avantageusement inférieure à un pourcent (1%), de préférence inférieure à zéro virgule cinq pourcent (0,5%), avantageusement entre zéro virgule deux (0,2) et zéro virgule trois pourcent (0,3 %) en poids sec d'acide par rapport au poids sec de kaolin.

On a constaté que pour des proportions supérieures à 1%, il y avait un risque de redispersion et de réaction de l'acide polyacrylique avec le polymère cationique de haut poids moléculaire (agent premier de rétention).

Par ailleurs, pour augmenter la rétention de fines et de charges dans la feuille de papier, le pH du kaolin prétraité doit être compris entre 3 et 7, de préférence entre 5 et 7. En effet, à un pH supérieur à 7, on a observé un risque de gonflement du kaolin.

Le prétraitement préféré du kaolin s'effectue de la manière indiquée en préambule aux exemples ci-dessous.

Exemple non-limitatif de prétraitement du kaolin :

La suspension de kaolin (connue sous le vocable papetier de « slurry ») à 30 % est préparée avec un polymère d'acide acrylique de viscosité à 15 % égale à 6500 cps, de poids moléculaire moyen 150 000 et de forte anionicité.

Le polymère polyacrylique peut être indifféremment linéaire ou ramifié et devra être fortement anionique, de préférence 100 % anionique.

A partir de la solution de polymère à 15 % en matière active, on prélève 6,67 g que l'on verse dans une fiole jaugée de 100 ml et on ramène à 100 ml avec de l'eau claire. Puis on prélève 9 ml de cette solution que l'on verse dans 61 ml d'eau claire pour obtenir un volume de 70 ml.

Il suffit alors de mettre sous agitation et d'ajouter doucement les 30 g sec de kaolin de surface spécifique 13,5 m2/g, de blancheur (ISO) 82,5 (pour indication, l'indice de blancheur du carbonate de calcium naturel varie de 82 à 86 pour de la craie), d'indice de jaune 6,5 et de coordonnées L, a*, b* respectives 95, -0,3 et 5,5.

On obtient alors un « slurry » de kaolin de viscosité 42 mPa·s viscosité permettant une mise en oeuvre facile du produit, qui est ensuite dilué à la concentration désirée puis injectée comme *second* agent de rétention durant la mise en feuille.

Dans les tableaux de résultats qui suivent, le dosage de l'agent second de rétention sera nommé D2 et sera exprimé en pourcentage en poids de kaolin sec par rapport à la pâte sèche.

L'invention s'applique aux procédés généraux de l'art antérieur en matière de fabrication du papier. En particulier, il sera tout à fait avantageux d'effectuer un cisaillement entre l'ajout du polymère floculant et l'ajout du système second de rétention selon l'invention.

Sans vouloir être limitée par une théorie, la demanderesse pense que, dans la variante de l'invention comportant un prétraitement, le kaolin est activé de manière très particulière par la combinaison a) du caractère anionique du polymère de traitement, b) par son poids moléculaire qui, pour un agent de prétraitement, est relativement élevé, et c) par la proportion de polymère de prétraitement qui est, à l'inverse, relativement faible.

Alince et Lepoutre ont utilisé un agent cationique (PEI) pour probablement agglomérer les charges avant leurs mises en contact avec la pâte et ainsi favoriser quelque peu l'interaction.

Il est donc d'autant plus surprenant que l'invention puisse utiliser un modifiant anionique.

Par ailleurs, l'état général de la technique détournait l'homme du métier de l'emploi du kaolin comme agent second de rétention, pour la raison indiquée ci-dessus et aussi car, par exemple, dans l'exemple 7 du document EP-A-0 235 893, il est indiqué que le kaolin ne conduit pas à de bons résultats, lorsqu'on le compare directement à la bentonite.

L'invention conduit aux avantages suivants.

Le principal avantage concerne la rétention des charges et des fines, comme les exemples ci-dessous le montreront.

Un second avantage est de réduire la porosité du papier obtenu.

Un troisième avantage réside dans la déconcentration ou clarification des eaux blanches.

On notera encore que l'emploi de kaolin de blancheur proche de celle du $CaCO_3$ naturel n'affecte en rien les caractéristiques de blancheur de la feuille obtenue.

De plus, l'opacité du papier obtenu est meilleure.

Enfin, en parvenant contre toute attente à employer du kaolin, sous réserve d'un prétraitement spécifique, l'invention évite l'inconvénient supplémentaire de l'emploi de la bentonite qui est d'induire un risque de gélification et très secondairement de risquer d'affecter la blancheur du papier même à de faibles dosages.

Protocole de préparation des essais :

La pâte haute consistance utilisée pour la préparation de la pâte diluée peut être préparée à partir des pâtes conventionnelles telles que les pâtes chimiques au sulfate ou au sulfite de bois de résineux ou de feuillus, ou encore les pâtes mécanique, thermo-mécanique, chimico-thermo-mécanique, blanchies ou non, ou encore les têtes de fibres recyclées.

La pâte haute consistance et le papier formé peuvent être chargés ou non avec des substances utilisées de manière conventionnelle par les papetiers comme le carbonate de calcium, le carbonate de calcium précipité, les glaises, le dioxyde de titane ou encore le talc. Cette charge, qui est principalement utilisée dans la fabrication du papier impression écriture, sera préférentiellement ajoutée durant la préparation de la pâte haute consistance dans des proportions allant de 5 à 50 % au maximum de charges par rapport au poids sec de pâte.

La pâte pourra contenir d'autres additifs tels que les agents de collage, en milieu neutre et alcalin des colles de type alkyles cétènes dimères et le pH pourra varier de 4 à 9 suivant le type de charge utilisé. D'une manière générale, la pâte basse consistance aura un contenu fibreux allant de 0,3 à 3 % et un contenu en solides de 0,3 à 1,5 %.

**Manière de réaliser l'invention :**

*Préparation de la pâte haute consistance :*

On prélève une quantité de pâte sèche de siccité et d'indice d'égouttage connus. On place cette pâte dans le désintégrateur de type Mark DIII, puis on rajoute un volume d'eau approprié et la charge minérale à partir d'une dispersion, connue dans la profession sous le vocable « slurry », de concentration connue, pour amener l'ensemble à une consistance de désintégration. On obtient alors une pâte de haute consistance.

En fin de désintégration, on mesure la consistance suivant la norme : TAPPI T 240-om-93.

On prélève alors la quantité nécessaire de pâte haute consistance pour réaliser une feuille au grammage désiré, que l'on place dans un bécher, de manière à constituer la pâte avant sa phase de dilution et de mise en feuille.

*Préparation de la pâte diluée :*

La pâte épaisse (ou de haute consistance) est ensuite diluée pour obtenir une pâte à basse consistance présentant un contenu fibreux entre 0,3 et 3 % et un contenu en solide compris entre 0,3 et 1,5 %.

*Mise en feuille :*

On réalise une feuille sur la formette de rétention automatisée dite CTP commercialisée par TECHPAP. Cet appareil permet de réaliser des feuilles tout en contrôlant des paramètres, tels que le cisaillement ou encore la dépression sous toile, pour simuler d'une part, le cisaillement du circuit primaire et ses pompes, mais aussi le fourdrinier et ses racles aspirantes. Ceci permet ainsi d'avoir une corrélation très élevée entre cette formette entièrement automatisée et une machine à papier.

On réalise des recyclages d'eaux blanches en vue de simuler la recirculation des eaux sous toile. Les eaux sont généralement récupérées puis remélangées à de la pâte haute consistance. On commence par diluer un premier bécher de pâte avec des eaux claires pour l'amener à une basse consistance (généralement de 0,7 %), puis on verse l'ensemble dans le cylindre de mélange de la formette.

Il suffit alors de lancer l'automate, dont les paramètres sont donnés ci-après. On réalise alors la feuille F1, qui correspond à la première passe. A ce moment, on récupère les eaux blanches de turbidité désignée ci-après par T1 exprimée en unités NTU puis on effectue la rétention totale sous toile de la première passe désignée ci-après en % (RF1). Enfin, on mesure par les cendres de cette feuille la rétention en charges minérales désignée ci-après en % (RC1).

Avec les eaux blanches de la première passe, on dilue à nouveau de la pâte haute consistance pour effectuer une seconde feuille F2 que l'on conserve pour avoir une idée de la formation, et enfin une troisième feuille F3 que l'on analyse comme la première.

Les paramètres de la formette de rétention automatique qui ont été fixés pour les différentes séquences, t, durant les essais sont les suivants :

t1 : 75 secondes d'agitation décomposées en une phase de

60 secondes à 1500 tours par minute (t/min) puis une seconde phase de 15 secondes à 1000 t/min.

t2: 3 secondes d'ouverture du clapet conique de déversement de la pâte.

t3 : 0,6 seconde de bullage d'air au-dessus de la grille pour éviter son bouchage.

t4 : 10 secondes de formation de la feuille.

t5 : 15 secondes de récupération des eaux blanches dans le réservoir.

Il est tout à fait avantageux d'effectuer un cisaillement entre l'ajout du polymère floculant et l'ajout du système second de rétention selon l'invention.

Le premier agent de rétention est ajouté au bout de dix secondes après le début de la séquence t1 sous une agitation de 1500 t/min ; en revanche, le second agent de rétention est ajouté au cours de la phase t1, au début de l'agitation à 1000 t/min.

Schéma décrivant les opérations dans le temps lors de la séquence t1:

| agitation 1500 rpm | | agitation 1000 rpm | |
|---|---|---|---|
| t=0s Pâte | t=10s Introduction du polymère floculant cationique (D1) | t=60s Ajout de l'agent second de rétention D2 | t=75s Fin de séquence t1 |

Les calculs de rétention sont les suivants :

- R désigne le pourcentage de rétention totale calculé par la formule :

$$R = \frac{Po}{Po+Pl} \times 100$$

avec :

Po : poids de la feuille sèche.
Pl : poids sec des matières en suspension présentes dans les eaux blanches.

- RC désigne le pourcentage de rétention des charges calculé par la formule :

$$RC = \frac{PC/Po}{C} \times 100$$

avec :

PC : poids des cendres après pyrolyse de la feuille à 460°C.
Po : poids de la feuille sèche.
C : pourcentage des charges introduits initialement.

On détermine les matières totales en suspension suivant la méthode TAPPI T656 cm/83.
On détermine les cendres suivant la méthode TAPPI T211 om-93.
On détermine l'indice d'égouttage, dénommé aussi indice de « freeness », suivant la méthode TAPPI T227 om-94.

Les composés mis en oeuvre :

*Premier agent de rétention (D1) :*

On met en oeuvre un copolymère de l'acrylamide et du chlorure de tri-méthylammonium éthyle acrylate, de viscosité intrinsèque 9,5 dl/g et de charge cationique égale à 10 moles % commercialisé par le demandeur sous la désignation FO 4190.

Dans les essais, le dosage du premier agent de rétention est désigné par D1 et exprimé en pourcentage en poids de matière sèche par rapport à la pâte sèche.

*Second Agent de rétention (D2) :*

Comme cela a été indiqué, le second agent de rétention (D2) est, selon le concept de l'invention, un pigment de kaolin et, selon une variante de l'invention, un kaolin prétraité par un polymère anionique. Ces deux options sont exemplifiées dans les tableaux ci-dessous.

A. - Lorsque le pigment de kaolin n'est pas prétraité, on prélève 30 g de kaolin que l'on met en suspension dans 70 ml d'eau. On obtient une suspension concentrée à 30 % massique que l'on utilise ensuite au taux de dilution souhaité pour l'injection.

Les exemples sans prétraitement sont marqués par un « * ».

B.- Lorsque l'on utilise du kaolin prétraité, on prépare tout d'abord une solution de polymère à 15 % d'un polymère d'acide acrylique de viscosité égale à 6500 mPa·s de poids moléculaire moyen 150 000 et de forte anionicité. On ajoute alors doucement, dans cette solution de polymères acryliques, sous agitation, 30 g sec de kaolin de surface spécifique 13,5 m2/g de blancheur (ISO) 82,5 (pour indication, l'indice de blancheur du carbonate de calcium naturel varie de 82 à 86 pour de la craie), d'indice de jaune 6,5 et de coordonnées L, a*, b* respectives 95, -0,3 et 5,5.

On obtient alors une suspension de kaolin présentant une viscosité de 42 cps, qui permet une mise en oeuvre facile du produit. La suspension est ensuite diluée à la concentration désirée, puis injectée comme agent secondaire de rétention durant la mise en feuille.

Dans les tableaux, le dosage du second agent de rétention est désigné par D2 et est exprimé en pourcentage en poids de kaolin sec par rapport à la pâte sèche.

Exemples 1 à 5

Dans ces exemples, on compare en milieu alcalin différentes substances minérales modifiées de faible surface spécifique et d'usage courant utilisées comme charges dans la fabrication du papier.

On effectue ainsi une série de tests en milieu alcalin sur une pâte ayant la composition suivante (en poids) :

- 10 % kraft de résineux blanchie
- 70 % kraft de feuillus blanchie
- 20 % de pâte mécanique de pin
- 25 % de carbonate de calcium
- 1,0 % d'une colle dénommée AKD.

Cette pâte présente un pH de 8,5 et un indice d'égouttage CSF de 365 ml.

Comme seconds agents de rétention, on utilise respectivement :

- E : dioxyde de titane (Sp/12 m2/g) prétraité par 0,3 % d'acide polyacrylique
- F : carbonate de calcium précipité (Sp* : 14,5 m2/g) prétraité par la même quantité d'acide polyacrylique
- G : carbonate de calcium (Sp* : 11 m2/g) prétraité par 0,3 % d'acide polyacrylique
- H : kaolin (Sp* : 13,5 m2/g) prétraité par 0,3 % d'acide polyacrylique, le pH de la préparation étant égal à 3.8.

La surface spécifique Sp* est mesurée par la méthode BET.

La feuille est réalisée avec une consistance de 0,7 % et le grammage théorique est de 134 g/m2.

Les résultats obtenus sont rassemblés dans le tableau 1 ci-après.

| Ex | D1 | D2 | T1 | T2 | T3 | R1 | R3 | RC1 | RC3 | CSF |
|----|------|------|------|------|------|------|------|------|------|------|
| 1 | 0,05 | 0,0 | 1350 | 1996 | 1980 | 89,8 | 87,1 | 58,8 | 75,2 | 470 |
| 2 | 0,05 | 3.0E | 1560 | 2268 | 2500 | 85,2 | 82,0 | 61,0 | 74,1 | 425 |
| 3 | 0,05 | 3,0F | 1209 | 2140 | 2380 | 85,4 | 83,5 | 57,3 | 72,0 | 410 |
| 4 | 0,05 | 3,0G | 1374 | 1910 | 2078 | 87,0 | 84,1 | 61,3 | 72,8 | 432 |
| 5 | 0,05 | 3,0H | 431 | 523 | 618 | 92,8 | 89,9 | 68,2 | 79,9 | 575 |

EP 0 800 597 B1

L'exemple 5 correspond à l'invention.

De ce tableau 1, découle l'intérêt majeur de l'utilisation du second agent de rétention préconisé par l'invention, c'est-à-dire le kaolin. En effet, l'utilisation des autres charges minérales les plus courantes et présentant une surface spécifique voisine de celle du kaolin, c'est-à-dire de l'ordre de 10 à 15 m2/g contre 100 m2/g et plus pour la bentonite, ne présente pas d'intérêt quant à l'amélioration des turbidités des eaux blanches, des rétentions totales et de charges.

Ces résultats confirment l'analyse précitée de l'exemple 7 du document EP-A-0 235 893 pour toutes les charges autres que le kaolin et aux dosages préconisés selon la présente invention.

En effet, le kaolin (exemple 5), permet d'abaisser de trois fois et plus la valeur de la turbidité (T1, T2 et T3) dans les eaux blanches. On observe également une amélioration notable de la rétention totale de 5 à 7 %, et une rétention des charges de 5 à 10 points.

En d'autres termes, on améliore d'autant les marges de fabrication, tout en améliorant corrélativement des qualités du papier (blancheur, brillance, opacité ...).

Exemples 6 à 19

Dans ces exemples, on effectue en milieu neutre une série de tests utilisant différents pourcentages d'agent de rétention secondaire dans une pâte ayant la composition suivante (en poids) :

- 50 % kraft de résineux blanchie
- 50 % kraft de feuillus blanchie
- 20 % de carbonate de calcium
- 1,0 % d'une colle dénommée AKD (alkényl cétène dimère).

Cette pâte présente un pH de 7,5 et un indice d'égouttage CSF de 270 ml. Comme second agent de rétention, on utilise différents pourcentages de kaolin. Le kaolin sans agent polyacrylique est désigné par «*».

Le pH du kaolin prétraité est égal à 3,8.

La feuille est réalisée avec une consistance de 0,7 % et le grammage théorique est de 128 g/m2.

Les résultats obtenus sont rassemblés dans le tableau 2 ci-après.

| Ex | D1 | D2 | T1 | T2 | T3 | R1 | R3 | RC1 | RC3 | CSF |
|---|---|---|---|---|---|---|---|---|---|---|
| 6 | 0,00 | 0,0 | 3630 | 3283 | 3196 | 69,1 | 71,3 | 9,5 | 10,0 | 270 |
| 7 | 0,01 | 0,0 | 2850 | 3010 | 3020 | 80,5 | 79,4 | 45,0 | 59,0 | 324 |
| 8 | 0,05 | 0,0 | 1080 | 1315 | 1310 | 91,6 | 90,2 | 57,2 | 75,0 | 344 |
| 9 | 0,10 | 0,0 | 540 | 670 | 990 | 94,0 | 93,8 | 71,0 | 78,9 | 374 |
| 10 | 0,01 | 0,2 | 2800 | 2950 | 3002 | 81,1 | 82,2 | 46,0 | 58,0 | 323 |
| 11 | 0,05 | 0,2 | 1005 | 1210 | 1280 | 91,7 | 91,0 | 61,0 | 77,0 | 345 |
| 12 | 0,10 | 0,2 | 520 | 655 | 940 | 93,9 | 92,1 | 70,4 | 77,2 | 382 |
| 13 | 0,01 | 1,0 | 2730 | 2892 | 2940 | 83,5 | 84,0 | 49,0 | 57,5 | 342 |
| 14 | 0,05 | 1,0 | 1009 | 1102 | 1213 | 92,0 | 91,5 | 60,2 | 78,2 | 351 |
| 15 | 0,10 | 1,0 | 495 | 603 | 910 | 94,4 | 94,5 | 71,9 | 79,4 | 385 |
| 16 | 0,01 | 3,0 | 2644 | 2812 | 2903 | 83,4 | 83,8 | 51,0 | 62,1 | 339 |
| 17 | 0,05 | 3,0 | 405 | 410 | 415 | 94,8 | 95,1 | 69,2 | 78,0 | 451 |
| 18 | 0,10 | 3,0 | 116 | 126 | 132 | 97,4 | 97,8 | 84,9 | 82,8 | 489 |
| 19* | 0,05 | 3,0* | 916 | 925 | 930 | 91,2 | 91,5 | 68,3 | 77,2 | 430 |

Pour un dosage minimum de un pour cent (1 %) en second agent de rétention préconisé par l'invention, c'est-à-dire le kaolin, on note une amélioration des turbidités (T1, T2, T3) et des rétentions totales (R1 et R3) par rapport au premier agent de rétention utilisé seul.

Les avantages liés à l'ajout du second agent de rétention par rapport à un système de rétention unimodale, sont particulièrement bien illustrés par l'exemple 8 (système monomodal) et l'exemple 17 (système dual de l'invention).

Ainsi, dans l'exemple 17, l'addition de trois pour cent (3 %) d'agent second de rétention permet d'abaisser de 62,5 % la turbidité de la première passe par rapport à celle du premier agent de rétention utilisé seul (exemple 8), mais également d'abaisser de 69 % la turbidité de la première et de la deuxième recirculation (exemple 8).

Le second agent de rétention utilisé dans l'exemple 17 permet d'une part d'augmenter de 21 % la rétention de charges de la première passe (exemple 8), d'autre part d'augmenter de 31 % l'égouttage de la pâte (exemple 8).

L'utilisation de co-réactifs dans l'exemple 17 en comparaison avec l'exemple 19*, permet une amélioration notable (de l'ordre de 125 %) des turbidités et une légère amélioration de la rétention totale.

Exemples 20 à 33

Dans ces exemples, on effectue en milieu alcalin une série de tests utilisant différents pourcentages d'agent second de rétention sur une pâte ayant la composition suivante (en poids) :

- 10 % kraft de résineux blanchie
- 70 % kraft de feuillus blanchie
- 25 % de carbonate de calcium
- 1 % de colle dénommée AKD
- 20 % de pâte mécanique de pin.

Cette pâte présente un pH de 8,5 et un indice d'égouttage CSF de 365 ml.

Comme second agent de rétention, on utilise différents pourcentages de kaolin. Le kaolin sans agent polyacrylique est désigné par «*».

Le pH du kaolin prétraité est égal à 3,8.

La feuille est réalisée avec une consistance de 0,7 % et le grammage théorique est de 134 g/m2.

Les résultats obtenus sont rassemblés dans le tableau 3 ci-après :

| Ex | D1 | D2 | T1 | T2 | T3 | R1 | R3 | RC1 | RC3 | CSF |
|----|----|----|----|----|----|----|----|-----|-----|-----|
| 20 | 0,00 | 0,0 | >4000 | >4000 | >4000 | 82,1 | 76,0 | 56,7 | 57,9 | 365 |
| 21 | 0,01 | 0,0 | >4000 | >4000 | >4000 | 83,6 | 78,2 | 57,0 | 61,3 | 410 |
| 22 | 0,05 | 0,0 | 1350 | 1996 | 1980 | 89,8 | 87,1 | 58,8 | 75,2 | 470 |
| 23 | 0,10 | 0,0 | 490 | 594 | 705 | 94,2 | 94,0 | 60,0 | 92,5 | 560 |
| 24 | 0,01 | 0,2 | >4000 | >4000 | >4000 | 84,2 | 79,0 | 58,3 | 62,1 | 415 |
| 25 | 0,05 | 0,2 | 1294 | 1725 | 1668 | 90,4 | 87,8 | 59,7 | 76,0 | 490 |
| 26 | 0,10 | 0,2 | 466 | 571 | 665 | 95,3 | 94,3 | 61,4 | 93,2 | 565 |
| 27 | 0,01 | 1,0 | >4000 | >4000 | >4000 | 86,4 | 81,2 | 63,0 | 65,3 | 435 |
| 28 | 0,05 | 1,0 | 1110 | 1620 | 1570 | 92,3 | 90,8 | 65,0 | 79,0 | 530 |
| 29 | 0,10 | 1,0 | 385 | 402 | 410 | 96,2 | 95,1 | 67,6 | 96,0 | 575 |
| 30 | 0,01 | 3,0 | 3557 | 3640 | 3710 | 87,2 | 81,0 | 65,1 | 66,0 | 440 |
| 31 | 0,05 | 3,0 | 431 | 523 | 618 | 92,8 | 89,9 | 68,2 | 79,9 | 540 |
| 32 | 0,10 | 3,0 | 152 | 138 | 146 | 97,2 | 96,4 | 72,2 | 96,6 | 575 |
| 33* | 0,05 | 3,0* | 685 | 712 | 741 | 90,2 | 86,3 | 67,6 | 75,4 | 520 |

Du tableau 3, découle l'intérêt majeur de l'ajout de l'agent second de rétention préconisé par l'invention, c'est-à-dire le kaolin.

Exemples 34 à 47

Dans ces exemples, on prépare en milieu acide une série de fermettes en utilisant comme charge principale du kaolin à partir d'une pâte ayant la composition suivante :

- 25 % kraft de résineux blanchie
- 75 % kraft de feuillus blanchie

- 15 % de kaolin de masse.

Cette pâte présente un pH de 5,5 et un indice d'égouttage CSF de 265 ml.

Comme second agent de rétention, on utilise différents pourcentages de kaolin. Le kaolin sans agent polyacrylique est désigné par «*».

Le pH du kaolin prétraité est égal à 3,8.

La feuille est réalisée avec une consistance de 0,7 % et le grammage théorique est de 123 g/m2.

Les résultats obtenus sont rassemblés dans le tableau 4 ci-après.

| Ex | D1 | D2 | T1 | T2 | T3 | R1 | R3 | RC1 | RC3 | CSF |
|-----|------|------|-------|-------|-------|------|------|------|------|-----|
| 34 | 0,00 | 0,0 | >4000 | >4000 | >4000 | 86,7 | 84,6 | 33,0 | 29,7 | 265 |
| 35 | 0,01 | 0,0 | 3712 | 3810 | 3860 | 90,7 | 88,2 | 59,7 | 60,2 | 324 |
| 36 | 0,05 | 0,0 | 1325 | 1417 | 1495 | 93,3 | 89,0 | 88,3 | 89,5 | 389 |
| 37 | 0,10 | 0,0 | 544 | 583 | 609 | 95,2 | 93,0 | 96,0 | 95,1 | 440 |
| 38 | 0,01 | 0,2 | 3607 | 3815 | 3882 | 90,7 | 88,0 | 61,8 | 62,7 | 334 |
| 39 | 0,05 | 0,2 | 1301 | 1419 | 1483 | 93,1 | 89,1 | 89,4 | 90,6 | 388 |
| 40 | 0,10 | 0,2 | 531 | 577 | 594 | 95,4 | 92,8 | 96,1 | 95,5 | 449 |
| 41 | 0,01 | 1,0 | 3402 | 3524 | 3535 | 90,8 | 87,4 | 64,0 | 66,7 | 335 |
| 42 | 0,05 | 1,0 | 1014 | 1112 | 1110 | 93,4 | 90,5 | 91,2 | 92,8 | 391 |
| 43 | 0,10 | 1,0 | 470 | 485 | 492 | 95,8 | 93,0 | 97,0 | 96,5 | 451 |
| 44 | 0,01 | 3,0 | 2950 | 3022 | 3125 | 91,6 | 90,0 | 68,1 | 69,9 | 348 |
| 45 | 0,05 | 3,0 | 510 | 514 | 519 | 94,0 | 93,7 | 94,0 | 93,0 | 428 |
| 46 | 0,10 | 3,0 | 315 | 295 | 284 | 96,6 | 95,8 | 98,1 | 98,2 | 446 |
| 47* | 0,05 | 3,0* | 495 | 503 | 510 | 93,9 | 93,2 | 94,2 | 93,1 | 435 |

De ce tableau, découlent les avantages du système dual avec kaolin et ceci quel que soit le dosage du premier agent de rétention.

En revanche, l'utilisation du polyacide acrylique (cf. comparaison des exemples 45 et 47*) n'apporte qu'une légère amélioration.

Exemples 48 à 52

Dans ces exemples, on compare le système dual préconisé par l'invention à d'autres systèmes particuliers existant sur le marché utilisant des minéraux dont la surface spécifique est très élevée.

Ces systèmes particuliers sont les suivants :

- le système Hydrocol (TM) (EP-A-0 235 893)combinant un polyacrylamide de haut poids moléculaire, substantiellement linéaire, avec une bentonite activée ;
- le système Composil (TM) (EP-A-0 348 366) associant un polyacrylamide cationique de haut poids moléculaire à une silice colloïdale de forte surface spécifique (BMA O);
- le système développé dans le document EP-A-0 373 306, combinant une hectorite dispersée par un polyacrylate de très bas poids moléculaire (préférentiellement inférieur à 100 000).

Dans ces exemples, on utilise une pâte ayant la composition suivante :

- 50 % kraft de résineux blanchie
- 50 % kraft de feuillus blanchie
- 20 % de carbonate de calcium
- 1 % de colle dénommée AKD.

Cette pâte présente un pH de 7,5 et un indice d'égouttage CSF de 270 ml.

Comme second agent de rétention, on utilise respectivement :

- A : bentonite type sodique à haut pouvoir gonflant
- B : silice colloÏdale type BMA O commercialisée par Eka Nobel dans le cadre de Composil
- C : hectorite dispersée avec cinq pour cent (5 %) d'un polyacrylique standard (poids moléculaire de 5000)
- D : second agent de rétention préconisé par l'invention dans

lequel ee pH du kaolin prétraité est égal à 3,8.

La feuille est réalisée avec une consistance de 0,7 % et le grammage théorique est de 128 g/m2.

Les résultats obtenus sont rassemblés dans le tableau 5 ci-après.

| Ex | D1 | D2 | T1 | T2 | T3 | R1 | R3 | RC1 | RC3 | CSF |
|----|-----|------|-----|------|------|------|------|------|------|-----|
| 48 | 0,10 | 0,0 | 540 | 670 | 990 | 94 | 93,8 | 71,2 | 76,8 | 374 |
| 49 | 0,10 | 0,2A | 95 | 128 | 156 | 98,5 | 97,2 | 78,3 | 80,9 | 652 |
| 50 | 0,10 | 0,2B | 160 | 265 | 318 | 96,3 | 95,8 | 71,8 | 77,7 | 510 |
| 51 | 0,10 | 0,2C | 206 | 1013 | 2019 | 95,5 | 92,6 | 78,4 | 71,7 | 451 |
| 52 | 0,10 | 3,0D | 116 | 126 | 132 | 97,4 | 97,8 | 89,8 | 94,2 | 505 |

Concernant la turbidité, les systèmes des exemples 49 à 52 sont largement supérieurs aux autres systèmes, le système de l'exemple 52 préconisé par l'inventeur présentant toutefois un avantage lorsque l'on recycle les eaux blanches.

On note d'autre part un effet dispersif du système des colloïdes décrit dans le document EP-A-0 373 306.

Concernant la rétention des charges, le système préconisé par l'invention permet d'obtenir des rétentions de charges très supérieures à celles des autres systèmes existants.

Concernant la rétention totale, les systèmes des exemples 49 à 52 conduisent à des résultats proches.

Concernant la formation, le système de l'exemple 49 développe une mauvaise formation par rapport aux autres exemples.

Exemples 53 et 54

Dans ces exemples, on effectue, en milieu alcalin, sur une pâte de composition identique à celle de l'exemple 31 précédent, une série de tests dans lesquels on fait varier le pH du kaolin prétraité.

| EX | D1 | D2 | T1 | T2 | T3 | R1 | R3 | RC1 | RC3 | pH |
|----|------|----|-----|-----|-----|--------|--------|--------|--------|-----|
| 31 | 0.05 | 3 | 431 | 523 | 618 | 92.80% | 89.90% | 68.20% | 79.90% | 3.8 |
| 53 | 0.05 | 3 | 334 | 448 | 469 | 97.18% | 96.54% | 84.33% | 88.60% | 5.5 |
| 54 | 0.05 | 3 | 250 | 397 | 470 | 97.41% | 96.65% | 87.46% | 86.13% | 7.0 |

En faisant varier le pH du kaolin prétraité, on note une amélioration de la turbidité des eaux blanches ainsi qu'un gain de 4 % en rétention 1ére passe R1, un gain de 7 % en rétention 3éme passe R3. Pour la rétention des charges minérales, on observe un gain de 23 % en rétention de charge 1ére passe RC1 et 11 % de rétention de charge 3ème passe RC3.

Exemples 55 et 56

Dans ces exemples, on effectue, en milieu acide, sur une pâte de composition identique à celle de l'exemple 45 précédent, une série de tests dans lesquels on fait varier le pH du kaolin prétraité.

| EX | D1 | D2 | T1 | T2 | T3 | R1 | R3 | RC1 | RC3 | pH |
|----|------|----|-----|-----|-----|--------|--------|--------|--------|-----|
| 45 | 0.05 | 3 | 510 | 514 | 519 | 94.00% | 93.70% | 94.00% | 93.00% | 3.8 |
| 55 | 0.05 | 3 | 293 | 409 | 417 | 96.65% | 96.03% | 95.94% | 93.15% | 5.5 |
| 56 | 0.05 | 3 | 326 | 497 | 447 | 96.53% | 96.21% | 94.82% | 90.64% | 7.0 |

En milieu acide, on note la même influence générale du pH qu'en milieu alcalin.

Exemples 57 et 58

Dans ces exemples, on effectue, en milieu neutre, sur une pâte de composition identique à celle de l'exemple 17 précédent, une série de tests dans lesquels on fait varier le pH du kaolin prétraité.

| EX | D1 | D2 | T1 | T2 | T3 | R1 | R3 | RC1 | RC3 | pH |
|----|------|----|-----|-----|------|--------|--------|--------|--------|-----|
| 17 | 0.05 | 3 | 405 | 410 | 415 | 94.80% | 95.10% | 69.20% | 78.00% | 3.8 |
| 57 | 0.05 | 3 | 789 | 878 | 1083 | 95.67% | 95.68% | 77.83% | 81.08% | 5.5 |
| 58 | 0.05 | 3 | 621 | 932 | 1036 | 96.57% | 95.62% | 80.15% | 84.83% | 7.0 |

En milieu neutre, on constate encore la même influence au niveau de la rétention totale et plus particulièrement un gain en rétention de charges de 15 % en RC1 et de 8.7 % en RC3.

Au regard de l'amélioration incontestable de la rétention, l'évolution de la turbidité apparaît paradoxale.

Les exemples 53 58 à montrent donc que le pH auquel le kaolin est prétrétraité, est un paramètre important dans le cadre de ce système dual. La plage optimale de pH de ce système se situe entre 5.0 et 7.0. En effet, c'est dans cette plage de pH faiblement acide que les meilleures valeurs de rétention totale et de rétention de charge ont été obtenues.

## Revendications

1. Procédé pour améliorer la rétention lors de la fabrication du papier, carton ou analogue, qui consiste :

   - tout d'abord, à ajouter à la suspension fibreuse un premier agent de rétention formé par un (co)polymère cationique de la famille des poly(méth)acrylamides de haut poids moléculaire, c'est-à-dire dont la viscosité intrinsèque est supérieure ou égale à 7dl/g, de préférence supérieure à 9,
   - puis, éventuellement à cisailler les flocs obtenus,
   - et enfin, à ajouter à la suspension un second agent de rétention de caractère minéral,

   **caractérisé en ce que** le second agent de rétention est un pigment de kaolin, dont la surface spécifique est comprise entre cinq et cent mètres carrés par grammes (5 à 100 $m^2$/g).

2. Procédé selon la revendication 1, **caractérisé en ce que** la concentration de kaolin par rapport au poids sec de la pâte est comprise entre zéro virgule cinq et cinq pour cent (0,5 et 5 %).

3. Procédé selon l'une des revendications 1 à 2, **caractérisé en ce que** le kaolin présente une surface spécifique comprise entre dix et trente mètres carrés par gramme (10 et 30 $m^2$/g).

4. Procédé selon l'une des revendications 1 à 3, **caractérisé en ce que** le kaolin est prétraité par un polymère d'acide vinylique fortement anionique, linéaire ou ramifié, de poids moléculaire compris entre cent mille (100 000) et quatre cent mille (400 000), de préférence entre 120 000 et 150 000.

5. Procédé selon la revendication 4, **caractérisé en ce que** le polymère d'acide vinylique est l'acide polyacrylique, dont la proportion est inférieure à un pourcent (1 %), de préférence inférieure à zéro virgule cinq pourcent (0,5 %), avantageusement entre zéro virgule deux et zéro virgule trois pourcent (0,2 et 0,3 %) en poids sec d'acide par rapport au poids sec de kaolin.

6. Procédé selon l'une des revendications 4 et 5, **caractérisé en ce que** le polymère d'acide vinylique anionique est choisi parmi le groupe des (co)polymère d'acide vinylique comprenant :

   - les homopolymères et copolymères d'acide acrylique, d'acide méthacrylique, d'acide acrylamidométhylpropylsulfonique (AMPS) ;
   - les copolymères des monomères ci-dessus avec un acrylamide ou méthacrylamide.

7. Procédé selon l'une des revendications 4 à 6, **caractérisé en ce que** le pH du kaolin prétraité est compris entre trois et sept (3 et 7), de préférence entre cinq et sept (5 et 7).

8. Procédé selon la revendication 1, **caractérisé en ce que** le premier agent de rétention est un polymère cationique de haut poids moléculaire choisi parmi le groupe des homo et copolymères linéaires ou ramifiés, comportant jusqu'à environ 30 ou mieux jusqu'à environ 50 à 55 moles pour cent de motifs cationiques.

9. Procédé selon la revendication 1, **caractérisé en ce que** le (co)polymère cationique de haut poids moléculaire de la famille des poly(méth)acrylamides est choisi parmi les homo et copolymères linéaires ou ramifiées, comportant jusqu'à environ 30 ou mieux jusqu'à environ 50 à 55 moles % de motifs cationiques, de monomères vinyliques éventuellement copolymérisés avec des monomères de type acrylamide (AM), méthacrylamide (MAM), ou choisis dans le groupe comprenant l'acrylate de diméthylaminoéthyle (ADAME), le métacrylate de diméthylaminoéthyle (MADAME), quaternisés ou salifiés, le chlorure d'acrylamidopropyltriméthylammonium (APTAC), le chlorure de diméthyldiallylammonium (DADMAC) et le chlorure de méthacrylamidopropyltriméthylammonium (MAPTAC).

10. Utilisation comme agent second de rétention dans un système dit "dual" pour la fabrication du papier, carton et analogues, d'une suspension de kaolin de surface spécifique de 5 à 100 $m^2$/g, éventuellement prétraitée par un polymère fortement anionique, linéaire ou ramifié, de poids moléculaire compris entre 100 000 et 400 000.

**Patentansprüche**

1. Verfahren zur Verbesserung der Retention bei der Herstellung von Papier, Pappe oder dergleichen, das aus folgendem besteht:

   - zuerst zur Fasersuspension ein erstes Retentionsmittel hinzuzufügen, das aus einem kationischen (Co)polymer aus der Gruppe der Poly(meth)acrylamide hohen Molekulargewichts besteht, d.h. dessen Strukturviskosität größer oder gleich 7 dl/g, vorzugsweise größer als 9, ist,
   - dann die erhaltenen Flocken gegebenenfalls abzuscheren,
   - und schließlich zur Suspension ein zweites Retentionsmittel mineralischer Natur hinzuzufügen,

   **dadurch gekennzeichnet, dass** das zweite Retentionsmittel ein Kaolinpigment ist, dessen spezifische Oberfläche fünf bis hundert Quadratmeter pro Gramm (5 bis 100 $m^2$/g) beträgt..

2. Verfahren nach Anspruch 1, **dadurch gekennzeichnet, dass** die Konzentration von Kaolin bezogen auf das Trockengewicht der Papiermasse nullkommafünf bis fünf Prozent (0,5 bis 5%) beträgt.

3. Verfahren nach einem der Ansprüche 1 bis 2, **dadurch gekennzeichnet, dass** das Kaolin eine spezifische Oberfläche von zehn bis dreißig Quadratmeter pro Gramm (10 bis 30 $m^2$/g) beträgt.

4. Verfahren nach einem der Ansprüche 1 bis 3, **dadurch gekennzeichnet, dass** das Kaolin mit einem stark anionischen, linearen oder verzweigten Vinylsäurepolymer mit einem Molekulargewicht von einhunderttausend (100 000) bis vierhunderttausend (400 000), vorzugsweise 120 000 bis 150 000, vorbehandelt wird.

5. Verfahren nach Anspruch 4, **dadurch gekennzeichnet, dass** das Vinylsäurepolymer Polyacrylsäure ist, deren Anteil weniger als ein Prozent (1%), vorzugsweise weniger als nullkommafünf Prozent (0,5%), vorteilhafter Weise von nullkommazwei bis nullkommadrei Prozent (0,2 bis 0,3%) Säuretrockengewicht bezogen auf das Trockengewicht von Kaolin beträgt.

6. Verfahren nach einem der Ansprüche 4 und 5, **dadurch gekennzeichnet, dass** das anionische Vinylsäurepolymer aus der Gruppe der Vinylsäure(co)polymere ausgewählt wird, die umfasst:

   - die Homo- und Copolymere von Acrylsäure, Methacrylsäure, Acrylamidmethylpropylsulfonsäure (AMPS),
   - die Copolymere der oben genannten Monomere mit einem Acrylamid oder einem Metacrylamid.

7. Verfahren nach einem der Ansprüche 4 bis 6, **dadurch gekennzeichnet, dass** der pH-Wert des vorbehandelten Kaolins zwischen drei und sieben (3 und 7), vorzugsweise zwischen fünf und sieben (5 und 7) liegt.

8. Verfahren nach Anspruch 1, **dadurch gekennzeichnet, dass** das erste Retentionsmittel ein kationisches Polymer hohen Molekulargewichts ist, das aus der Gruppe der linearen oder verzweigten Homo- oder Copolymere ausgewählt wird, die bis zu ca. 30 oder besser bis ca. 50 - 55 Mol-% kationischer Grundeinheiten umfassen.

9. Verfahren nach Anspruch 1, **dadurch gekennzeichnet, dass** das kationische (Co-)Polymer hohen Molekulargewichts aus der Familie der Poly(meth)acrylamide aus den linearen oder verzweigten Homo- oder Copolymeren ausgewählt wird, die bis zu ca. 30 oder besser, bis zu 50 - 55 Mol-% kationischer Grundeinheiten umfassen, Vinylmonomeren, die mit Monomeren der Acrylamidart (AM) copolymerisiert wurden, Methacrylamid (MAM), oder aus der Gruppe ausgewählt wird, die Dimethylaminoethylacrylat (ADAME), quaternisiertes oder salzbildendes Dimethylaminoethylmethacrylat (MADAME), Acrylamidpropyltrimethylammoniumchlorid (APTAC), Dimethyldiallylammoniumchlorid (DADMAC) und Methacrylamidpropyltrimethylammoniumchlorid (MAPTAC) umfasst.

10. Verwendung einer Suspension von Kaolin mit einer spezifischen Oberfläche von 5 bis 100 m$^2$/g, das gegebenenfalls mit einem stark anionischen, linearen oder verzweigten Polymer mit einem Molekulargewicht von 100 000 bis 400 000 vorbehandelt wurde, als zweites Retentionsmittel in einem als "dual" bezeichneten System zur Herstellung von Papier, Pappe und dergleichen.

## Claims

1. Process for improving retention during the manufacture of paper, board or the like, which consists:

    - first of all in adding to the fibrous suspension a first retaining agent formed by a cationic (co)polymer selected among poly(metha)crylamide of high molecular weight, having a intrinsic viscosity of at least 7 dl/g, advantageously up to 9 dl/g,
    - then, optionally in shearing the flocs obtained,
    - and finally, in adding to the suspension a second retaining agent of inorganic nature,

    <u>characterized</u> in that the second retaining agent is a kaolin pigment having a specific surface of between five and one hundred square metres per gram (5 to 100 m$^2$/g).

2. Process according to Claim 1, **characterized in that** the concentration of kaolin in relation to the dry weight of the pulp is between zero point five and five per cent (0.5 and 5 %).

3. Process according to either of Claims 1 and 2, **characterized in that** the kaolin has a specific surface of between ten and thirty square metres per gram (10 and 30 m$^2$/g).

4. Process according to one of Claims 1 to 3, **characterized in that** the kaolin is pretreated with a linear or branched, highly anionic vinylic acid polymer of molecular weight of between one hundred thousand (100 000) and four hundred thousand (400 000), preferably between 120 000 and 150 000.

5. Process according to Claim 4, **characterized in that** the vinylic acid polymer is polyacrylic acid, the proportion of which is lower that one per cent (1 %), preferably lower than zero point five per cent (0.5 %), advantageously between zero point two and zero point three per cent (0.2 and 0.3 %) by dry weight of acid relative to the dry weight of kaolin.

6. Process according to either of Claims 4 and 5, **characterized in that** the anionic vinylic acid polymer is chosen from the group of vinylic acid (co)polymers including:

    - the homopolymers and copolymers of acrylic acid, of methacrylic acid and of acrylamidomethylpropylsulphonic acid (AMPS) ;
    - the copolymers of the above monomers with an acrylamide or methacrylamide.

7. Process according to one of Claims 4 to 6, **characterized in that** the pH of the pretreated kaolin is between three and seven (3 and 7), preferably between five and seven (5 and 7).

8. Process according to Claim 1, **characterized in that** the first retaining agent is a cationic polymer of high molecular weight, chosen from the group of linear or branched homo- and copolymers containing up to approximately 30 or, better, 50-55 moles per cent of cationic units.

9.  Process according to Claim 1, **characterized in that** the cationic (co)polymer of high molecular weight selected among poly(metha)crylamides is chosen from linear or branched homo- and copolymers containing up to approximately 30 or, better, 50-55 mol% of cationic units, of vinyl monomers optionally copolymerized with monomers of acrylamide (AM) or methacrylamide (MAM) type or chosen from the group including dimethylaminoethyl acrylate (ADAME), dimethylaminoethyl methacrylate (MADAME), which are quarternized or salified, acrylamidopropyltrimethylammonium chloride (APTAC), dimethyldiallylammonium chloride (DADMAC) and methacrylamidopropyltrimethylammonium chloride (MAPTAC).

10. Use as a second retaining agent in a so-called "dual" system for the manufacture of paper, board and the like, of a kaolin suspension having a specific surface of between 5 and 100 m$^2$/g, optionally pretreated with a linear or branched highly anionic polymer, of molecular weight of between 100 000 and 400 000.